# EUROPÄISCHE PATENTSCHRIFT

(11) **EP 1 879 199 B1**
(45) Veröffentlichungstag und Bekanntmachung des Hinweises auf die Patenterteilung: **24.08.2016**
(21) Anmeldenummer: 07006347.4
(22) Anmeldetag: 28.03.2007
(51) Int. Cl.: H01B 13/00, H02G 1/12, H05K 13/06

(54) **Vorrichtung zur wahlweisen Zuführung von einem von zwei Kabeln zu einem von zwei antreibbaren Reibrollen gebildeten Spalt**
Device for leading one of two cables to a slot constituted by two powered friction rollers
Dispositif d'introduction au choix de l'un de deux câbles dans une fente constituée de deux rouleaux de friction d'entraînement

(30) Priorität: 13.07.2006 DE 102006032361
(43) Veröffentlichungstag der Anmeldung: 16.01.2008
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE); Wuhrer, Alexander, 69190 Walldorf (DE)
(74) Vertreter: Hoffmann Eitle

(56) Entgegenhaltungen:
- EP-A1- 0 221 482
- WO-A1-88/05969
- US-A- 4 997 173

## Beschreibung

### Technisches Gebiet

Die Erfindung betrifft eine Vorrichtung zur wahlweisen Zuführung von Kabeln zu einem von zwei antreibbaren Reibrollen begrenzten Spalt, umfassend zumindest zwei Kabelführungen mit jeweils einem verschiebbar darin geführten Kabel, dessen Ende der jeweilige Kabelführung in Vorschubrichtung überragt und das mittels der jeweiligen Kabelführung in den Spalt einführbar, von den Reibrollen erfass- und vorschiebbar ist.

Eine solche Vorrichtung gelangt beim Ablängen von Kabeln und/oder bei der Bestückung von Kabeln mit Crimpkontakten zur Anwendung. Die Kabel können dabei von unterschiedlichem Durchmesser und/oder unterschiedlicher Einfärbung sein, um z.B. den sicherheitstechnischen Anforderungen zum Anschluss von Elektrogeräten gerecht zu werden. In Abhängigkeit von der jeweiligen Länge einer Anschlussleitung ist dabei erforderlich, z.B. eine willkürlich vorgegebene Anzahl von Kabelbündeln bereitzustellen, die jeweils drei oder fünf unterschiedlich eingefärbte Einzelkabel umfassen. Demgemäss ist es erforderlich, in kurzen Abständen aufeinanderfolgend jeweils die Farbe zu wechseln, um die erforderliche Anzahl der Bündel bereitstellen zu können.

### Stand der Technik

Eine solche Vorrichtung ist aus der DE 36 11 805 A1 bekannt. Die Kabelführungen sind dabei voneinander getrennt hergestellt und mittels eines Industrieroboters nach Bedarf aus einem Lager entnehmbar, mit einem die Reibrollen umfassenden Antriebsmodul zu einem geschlossenen Werkzeug zusammenfassbar, wobei die Kabel dem Spalt der Reibrollen in Bewegungsrichtung zugeführt werden. Die bekannte Vorrichtung erlaubt es, mehrere Kabel gleichzeitig abzulängen. Der Herstellaufwand und der Betrieb der bekannten Vorrichtung ist jedoch für viele Anwendungen und insbesondere für das Bestücken der einzelnen Kabel mit Crimpkontakten viel zu aufwändig.

Als weiterer Stand der Technik ist das Dokument WO 88/05969 A1 bekannt, das ein Werkzeug zum Verlegen und Ablängen von Kabeln mit Hilfe einer Handhabungseinrichtung betrifft. In der in Art eines "Revolvers" ausgebildeten Wechseleinheit sind insgesamt sechs Kabelführungen vorgesehen, in die Kabel eingesetzt sind. Jede Kabelführung weist eine Gegenrolle sowie ein Klemmelement auf, das normalerweise das Kabel in der Kabelführung festlegt, sodass es nicht aus der Führung herausgezogen werden kann.

Als weiterer Stand der Technik ist auch das Dokument US 4,997,173 A1 zu nennen.

Ferner ist ein Verfahren sowie eine Transportvorrichtung aus der EP 0 221 482 A1 bekannt. Wird ein zu bearbeitendes Kabel gewechselt, so wird das Kabel zunächst zurücktransportiert,dann ein oberer Riemenantrieb durch einen pneumatisch oder hydraulisch betätigten Kolben angehoben und anschließend die Aufnahmevorrichtung um eine Achse Y so verdreht, dass das gewünschte Kabel sich in der gewünschten Position befindet.

### Darstellung der Erfindung

Der Erfindung liegt die Aufgabe zur Grunde, eine solche Vorrichtung bei vermindertem Herstellaufwand derart weiter zu entwickeln, dass diese kompakter ausgestaltet werden kann.

Diese Aufgabe wird erfindungsgemäss mit den kennzeichnenden Merkmalen von Anspruch 1 gelöst. Auf vorteilhafte Ausgestaltungen nehmen die Unteransprüche Bezug.

Zur Verminderung der Baugrösse hat es sich als bewährt, wenn das Ende eines aus einer Kabelführung vorstehenden Kabels mittels des Revolvers in einer Richtung parallel zur Achse der Reibrollen in den Spalt absenkbar und aus diesem heraushebbar ist.

Die Reibrollen sind zweckmässig mit senkrechter Achse und horizontal nebeneinanderliegend auf einem Tisch angeordnet und federnd mit einander verpresst. Sie sind gegen die Kraft der Federn manuell oder motorisch voneinander entfernbar. Ihr oberer Rand kann kegelig nach oben verjüngt ausgebildet sein, um das Einfügen des Kabels von oben zu erleichtern. Zweckmässig ist der durch die kegelige Verjüngung gebildete Spalt an seiner weitesten Stelle 0,8 bis 1,2 mal so gross wie der Durchmesser des grössten einzulegenden Kabels.

Der Revolver ist zweckmässig oberhalb des Tisches fest montiert und reversibel um sine Achse verdrehbar. In jede der benötigten Kabelführungen, die gerade nicht in Benutzung ist, kann ein neues und gegebenenfalls abweichendes Kabel eingefädelt werden, ohne dass es hierzu einer Betriebsunterbrechung bezüglich des Abläng- oder Crimpprozesses bedarf. Die einzelnen Kabel können somit zugleich in der jeweils erforderlichen Länge bereitgestellt und mit den jeweils erforderlichen Crimpverbindern versehen werden. Dies kann fortgesetzt werden, bis die jeweils benötigte Stückzahl der einzelnen Kabel fertiggestellt und in einer Aufnahme abgelegt ist.

Im Anschluss daran wird ein Kabelwechsel vorgenommen, indem das abgearbeitete Kabel senkrecht nach oben aus dem Spalt der beiden Reibrollen herausgehoben, und der Revolver so geschwenkt wird, dass sich das nächste abzuarbeitende Kabel oberhalb des Spaltes befindet. Es wird dann in den Spalt eingeführt, indem der Revolver und damit zugleich die zugehörige Kabelführung abgesenkt wird, bis die Reibrollen das Kabel ergreifen und seiner Abarbeitung zuführen. Dies kann so schnell geschehen, dass keine nennenswerte Betriebsunterbrechung entsteht.

Die den einzelnen Kabelführungen zugeführten Kabel von unterschiedlicher Einfärbung und/oder Ausbildung können auf Kabeltrommeln bereitgestellt werden, die vor der Vorrichtung stationär untergebracht und dort leicht auch hinsichtlich der Restmenge kontrollierbar sind. Die von den Kabeltrommeln während der Abarbeitung eines Auftrags abgezogenen Kabel werden je nach Relativverdrehung de Revolvers mit den anderen Kabeln mehr oder weniger intensiv verdrillt, was wegen der reversiblen Rotierbarkeit des Revolvers, in dem die Kabelführungen aufgenommen sind, nicht zu einer gegenseitigen Berührung oder gar Hemmung der Relativbeweglichkeit führen kann. Der Revolver ist zur Vermeidung einer Verzwirnung der Kabel insbesondere nicht um einen größeren Winkel als 360 ° verdrehbar und wird beim Erreichen seiner Maximalverdrehbarkeit immer wieder in Richtung der Nullstellung zurückgedreht, bis die jeweils benötigte, neue Position erreicht ist. Die Relativverdrehung des Revolvers beträgt daher im Normalfall, bezogen auf die Nullstellung, höchstens 180°.

In dem Revolver können an sich beliebig viele Kabelführungen enthalten sein und auch Kabelführungen mit einem voneinander verschiedenen Durchmesser. Die Kabelführungen können auch auf unterschiedlichen Teilkreisdurchmessern angeordnet sein, um möglichst viele unterschiedliche Kabel aufeinanderfolgend verarbeiten zu können. Als vorteilhaft hat es sich bewährt, wenn jeweils mindestens zwei Kabelführungen mit einem übereinstimmenden Durchmesser vorhanden sind, die mit demselben Kabel bestückbar sind. Falls eine Kabeltrommel vor dem Ende eines Auftrags leer wird, kann dadurch das Kabel schnell gewechselt und der Auftrag ohne nennenswerte Betriebsunterbrechung bis zu seinem Abschluss abgearbeitet werden.

Der Revolver kann zwei bis acht Kabelführungen umfassen und einstückig ausgebildet sein. Eine mehrteilige Ausbildung, die einzelne Kabelführungen nach Bedarf auszutauschen ist natürlich möglich. Die Kabelführungen können dabei durch Rohre gebildet sein. Die Kabelführungen können in Bewegungsrichtung der Kabel zumindest zwei voneinander beabstandete Teilführungen umfassen, die einen Abstand von einander haben. Die Sichtkontrolle des jeweils verarbeiten und der übrigen eingelegten Kabel wird dadurch vereinfacht.

Das Anheben, Absenken und die Relativverdrehung des Revolvers können manuell oder motorisch und gegebenefalls taktgesteuert erfolgen.

Die Kabelführungen können jeweils eine Blockiereinrichtung für das darin geführte das Kabel enthalten, um zu verhindern, dass ein eingefädeltes ungewollt aus einer Kabelführung herausfällt und u.U. zu einem unpassenden Zeitpunkt neu eingefädelt werden muss. Eine solche Blockiereinrichtung kann durch eine Kabelbremse gebildet sein, die bei Nichtbenutzung einer Kabelführung automatisch schließt und die manuell geöffnet werden kann, um z.B. ein neues Kabel einfädeln zu können.

Die Reibrollen können signalgesteuert an das jeweilige Kabel anleg- und von diesem entfernbar ausgebildet sein, um das Einlegen eines neuen Kabels zu erleichtern. Dazu ist wenigstens eine der Reibrollen federnd auf einem motorischen Antrieb abgestützt, beispielsweise auf einer mit einem Strömungsmittel druckbeaufschlagbaren Kolben- Zylindereinheit.

Nach einer anderen Ausgestaltung ist es vorgesehen, dass die Kabelführungen auf der von dem Spalt abgewandten Seite der Reibrollen durch Hilfsführungen ergänzt und mit diesen starr verbunden sind. Die Kabelführungen und die Hilfsführungen sind hinsichtlich ihres Innendurchmessers übereinstimmend ausgebildet. Sie erlauben es in dieser Kombination, das zu verarbeitende Kabel seiner weiteren Verwendung besonders störungssicher zuzuführen.

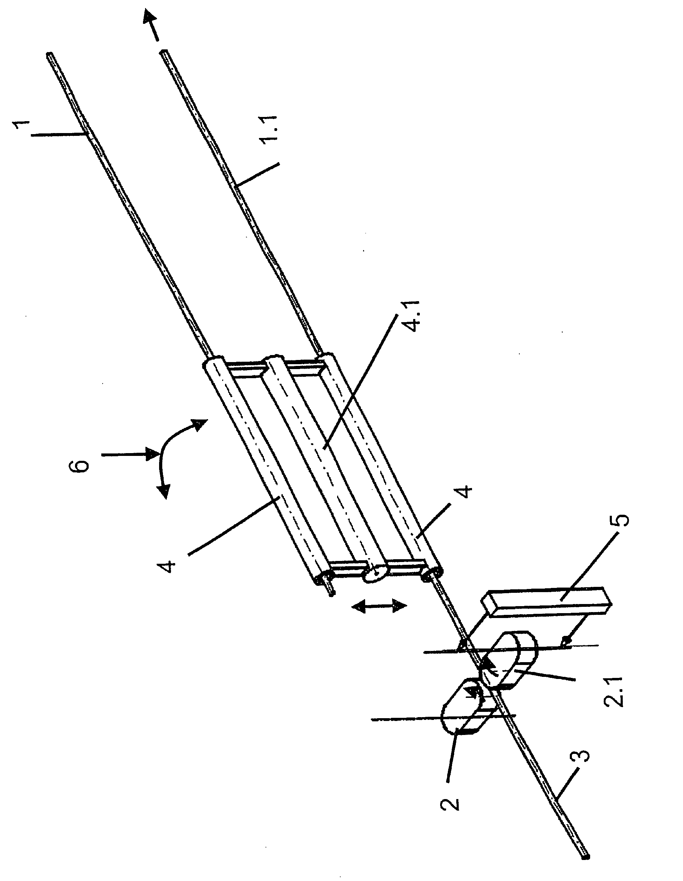

### Kurzbeschreibung der Zeichnung

In der beiliegenden Zeichnung ist eine beispielhafte Ausführung der erfindungsgemäßen Vorrichtung in perspektivischer Ansicht wiedergeben. Sie wird nachfolgend näher beschrieben: Ausführung der Erfindung

Die in der Zeichnung dargestellte Vorrichtung dient zur wahlweisen Zuführung von Kabeln 1, 1.1 zu einem von zwei antreibbaren Reibrollen 2, 2.1 begrenzten Spalt 3. Sie umfasst zwei um 180° versetzt angebrachte Kabelführungen 4 mit jeweils einem verschiebbar darin geführten Kabel 1, 1.1, dessen Ende das der jeweiligen Kabelführung 4 in Vorschubrichtung überragt und das mittels der jeweiligen Kabelführung 4 in den Spalt 3 der Reibrollen 2, 2.1 einführbar, von den Reibrollen 2, 2.1 erfass- und in Pfeilrichtung vorschiebbar ist.

Beide Reibrollen 2, 2.1 sind stationär auf einem ebenen Tisch gelagert. Mindestens eine der Reibrollen 2, 2.1 ist motorisch in Pfeilrichtung verdrehbar und elastisch an die andere Reibrolle 2.1, 2 bzw. an ein in dem dazwischen liegenden Spalt 3 befindliches Kabel 1, 1.1 anpreßbar und davon entfernbar.

Die Kabelführungen 4 sind untereinander starr verbunden und in einem parallel zur Achse der Kabel 1, 1.1 gelagerten und reversibel um seine Achse rotierbaren Revolver 6 enthalten, wobei das jeweilige Ende eines aus einer bestimmten Kabelführung 4 vorstehenden Kabels 1, 1.1 mittels des Revolvers 6 in einer Richtung parallel zur Achse der Reibrollen in den Spalt 3 absenkbar und aus diesem heraushebbar ist.

Der Revolver 6 wird bei dieser Bauform durch zwei um 180° versetzte Rohre gebildet, die mit einem zentralen Stützrohr 4.1 verschweißt sind. Statt dessen kann auch eine Bauform zur Anwendung gelangen, bei der der Revolver insgesamt aus einem zylindrischen Körper besteht, der einen oder mehrere Kreise von achsparallelen Bohrungen in der Nähe des Außenumfangs aufweist, die als Kabelführungen dienen und die gemeinsam eine zentral angeordnete, achsparallele Bohrung umschließen, die als Lager des Revolvers dient. Eine solche Bauform kann bis zu acht Kabelführungen auf einem einzigen Durchmesser umfassen, wobei zumindest zwei Kabelführungen übereinstimmend ausgebildet sein sollen.

Die Kabelführungen 4, 4.1 können jeweils eine Blockiereinrichtung für das darin geführte das Kabel 1, 1.1 enthalten, um zu verhindern, dass ein darin aufgenommenen Kabel unbeabsichtigt herausfällt.

Die Vorrichtung lässt ich sehr gut automatisiert betreiben und insbesondere in einer solchen Bauform in eine Crimpvorrichtung integrieren, um halb- oder vollautomatisch beliebig große Anzahlen von in definierte Weise eingefärbte und abgelängte Kabel mit Crimpverbindern zu bestücken, die beispielsweise beim Anschluss von haushaltsüblichen Elektrogeräten Verwendung finden können. Die Herstellkosten solcher Geräte lassen sich dadurch vermindern.

Die Kabelführungen 4 können auf der von dem Spalt 3 abgewandten Seite der Reibrollen 2,2.1 durch Hilfsführungen ergänzt und mit diesen Hilfsführungen starr verbunden sein. Die Betätigung der Kabelführungen und der Hilfsführungen erfolgt dadurch gemeinsam.

## Patentansprüche

1. Vorrichtung zur wahlweisen Zuführung von Kabeln (1, 1.1) zu einem von zwei antreibbaren Reibrollen (2, 2.1) begrenzten Spalt (3), umfassend die zwei Reibrollen (2, 2.1) sowie zumindest zwei Kabelführungen (4) mit jeweils einem verschiebbar darin geführten Kabel, dessen Ende die jeweilige Kabelführung (4) in Vorschubrichtung überragt und das mittels der jeweiligen Kabelführung (4) in den Spalt (3) einführbar und von den Reibrollen (2, 2.1) erfass- und vorschiebbar ist,
wobei beide Reibrollen (2, 2.1) stationär gelagert sind und mindestens eine der Reibrollen (2, 2.1) an ein im Spalt (3) befindliches Kabel (1, 1.1) anpreßbar und davon entfernbar ist, die Kabelführungen (4) untereinander starr verbunden und in einem parallel zur Achse der Kabelführungen (4) gelagerten und reversibel um seine Achse rotierbaren Revolver (6) enthalten sind und das jeweilige Ende eines aus einer bestimmten Kabelführung (4) vorstehenden Kabels (1, 1.1) mittels des Revolvers (6) in den Zwischenraum der Reibrollen (2, 2.1) einbringbar ist, **dadurch gekennzeichnet, dass**
das jeweilige Ende eines aus einer bestimmten Kabelführung (4) vorstehenden Kabels (1, 1.1) mittels des R evolvers (6) in einer zur Achse der Reibrollen parallelen Richtung in den Spalt (3) absenkbar und aus diesem heraushebbar ist.

2. Vorrichtung nach Anspruch 1, **dadurch gekennzeichnet, dass** der Revolver (6) zwei bis acht Kabelführungen (4) umfasst.

3. Vorrichtung nach einem der Ansprüche 1 bis 2, **dadurch gekennzeichnet, dass** die Kabelführungen (4) durch Rohre gebildet sind.

4. Vorrichtung nach einem der Ansprüche 1 bis 3, **dadurch gekennzeichnet, dass** die Kabelführungen (4) jeweils eine Blockiereinrichtung für das darin geführte Kabel (1, 1.1) enthalten.

5. Vorrichtung nach einem der Ansprüche 1 bis 4, **dadurch gekennzeichnet, dass** die Reibrolle (2, 2.1) signalgesteuert an das Kabel (1, 1.1) anleg- und von diesem entfernbar ist.

6. Vorrichtung nach einem der Ansprüche 1 oder 4, **dadurch gekennzeichnet, dass** die Kabelführungen (4) auf der von dem Spalt (3) abgewandten Seite der Reibrollen durch Hilfsführungen ergänzt und mit diesen starr verbunden sind.

7. Vorrichtung nach einem der Ansprüche 1 bis 6, **dadurch gekennzeichnet, dass** die Kabelführungen (4) in Bewegungsrichtung der Kabel (1, 1.1) zumindest zwei voneinander beabstandete Teilführungen umfassen.

## Claims

1. Device for selectively feeding cables (1, 1.1) to a slot (3) defined by two drivable friction rollers (2, 2.1), comprising the two friction rollers (2, 2.1) as well as at least two cable conduits (4) each having a cable which is guided slidably therein and of which the end protrudes beyond the respective cable conduit (4) in the direction of advance and which can be introduced into the slot (3) by means of the respective cable conduit (4) and picked up and advanced by the friction rollers (2, 2.1),
wherein both friction rollers (2, 2.1) are mounted stationarily and at least one of the friction rollers (2, 2.1) can be pressed against and moved away from a cable (1, 1.1) located in the slot (3), the cable conduits (4) are rigidly connected to each other and are contained in a turret (6) which is mounted parallel to the axis of the cable conduits (4) and rotatable about its axis reversibly, and the respective end of a cable (1, 1.1) protruding from a specific cable conduit (4) can be introduced by means of the turret (6) into the gap between the friction rollers (2, 2.1),
**characterised in that**
the respective end of a cable (1, 1.1) protruding from a specific cable conduit (4) can be lowered into the slot (3) and lifted out of it in a direction parallel to the axis of the friction rollers by means of the turret (6).

2. Device according to claim 1, **characterised in that** the turret (6) comprises two to eight cable conduits (4).

3. Device according to either of claims 1 to 2, **characterised in that** the cable conduits (4) are formed by tubes.

4. Device according to any of claims 1 to 3, **characterised in that** the cable conduits (4) in each case contain a locking device for the cable (1, 1.1) being guided therein.

5. Device according to any of claims 1 to 4, **characterised in that** the friction roller (2, 2.1) can be applied to the cable (1, 1.1) and moved away from it under signal control.

6. Device according to either of claims 1 or 4, **characterised in that** the cable conduits (4) are supplemented by auxiliary guides on the side of the friction rollers facing away from the slot (3) and rigidly connected thereto.

7. Device according to any of claims 1 to 6, **characterised in that** the cable conduits (4) comprise at least two spaced-apart partial conduits in the direction of movement of the cables (1, 1.1).

## Revendications

1. Dispositif d'introduction au choix de câbles (1, 1.1) dans une fente (3) délimitée par deux rouleaux de friction (2, 2.1) pouvant être entraînés, comprenant les deux rouleaux de friction (2, 2.1) ainsi qu'au moins deux guides câble(4) avec respectivement un câble guidé de manière mobile à l'intérieur de ceux-ci, dont l'extrémité dépasse le guide câble(4) respectif dans le sens d'avance et qui peut être introduit dans la fente(3) au moyen du guide câble(4) respectif et être saisi et avancé par les rouleaux de friction (2, 2.1),
dans lequel les deux rouleaux de friction (2, 2.1) sont logés de manière stationnaire et au moins un des rouleaux de friction (2, 2.1) peut être pressé contre un câble (1, 1.1) situé dans la fente (3) et en être éloigné, les guides câble (4) sont reliés entre eux de manière rigide et contenus dans un révolver (6) rotatif de manière réversible autour de son axe et logé parallèlement à l'axe des guides câble (4) et l'extrémité respective d'un câble (1, 1.1) faisant saillie d'un guide câble (4) défini peut être introduite dans l'espace intermédiaire des rouleaux de friction (2, 2.1) au moyen du révolver (6), **caractérisé en ce que** l'extrémité respective d'un câble (1, 1.1) faisant saillie d'un guide câble (4) défini peut être descendue dans la fente (3)au moyen du révolver (6) dans une direction parallèle à l'axe des rouleaux de friction et en être retirée.

2. Dispositif selon la revendication 1, **caractérisé en ce que** le révolver (6) comprend deux à huit guides câble (4).

3. Dispositif selon l'une quelconque des revendications 1 à 2, **caractérisé en ce que** les guides câble (4) sont formés par des tubes.

4. Dispositif selon l'une quelconque des revendications 1 à 3, **caractérisé en ce que** les guides câble (4) contiennent respectivement un dispositif de blocage pour le câble (1, 1.1) guidé à l'intérieur de ceux-ci.

5. Dispositif selon l'une quelconque des revendications 1 à 4, **caractérisé en ce que** le rouleau de friction (2, 2.1) peut être appliqué contre le câble (1, 1.1) et en être éloigné de manière commandée par signal.

6. Dispositif selon l'une quelconque des revendications1 ou 4, **caractérisé en ce que** les guides câble (4) sont complétés sur le côté des rouleaux de friction opposé à la fente (3) par des guides auxiliaires et reliés à ceux-ci de manière rigide.

7. Dispositif selon l'une quelconque des revendications1 à 6, **caractérisé en ce que** les guides câble (4) comprennent dans le sens de déplacement des câbles (1, 1.1) au moins deux guides partiels à distance l'un de l'autre.
